# FASCICULE DE BREVET EUROPEEN

(11) **EP 2 124 153 B1**
(45) Date de publication et mention de la délivrance du brevet: **09.01.2013**
(21) Numéro de dépôt: 09290365.7
(22) Date de dépôt: 18.05.2009
(51) Int. Cl.: G06F 13/10, G06F 9/44

(54) **Procédés et dispositif de mise en oeuvre de périphériques multifonction avec un gestionnaire de périphérique standard unique**
Verfahren und Vorrichtung zur Inbetriebnahme von Multifunktionsperipheriegeräten mit einem einzigen Standard-Peripheriebetreiber
Methods and device for implementing multi-functional peripherals using a single standard driver

(30) Priorité: 21.05.2008 FR 0853305
(43) Date de publication de la demande: 25.11.2009
(73) Titulaire: Bull S.A.S., 78340 Les Clayes sous Bois (FR)
(72) Inventeur: Gouraud, Thierry, 78450 Villepreux (FR)
(74) Mandataire: Pellegrini, Marie Claude

(56) Documents cités:
- WO-A-2008/003599
- US-A1- 2007 168 668

## Description

La présente invention concerne les interfaces entre un système hôte et un périphérique et plus particulièrement des procédés et un dispositif de mise en oeuvre de périphériques multifonction, en particulier de périphériques multifonction USB, avec un gestionnaire de périphérique standard unique, sans gestionnaire de périphérique spécifique.

Il existe de nombreux périphériques USB, par exemple des dispositifs de stockage, de pointage ou de sécurisation de données, pouvant être connectés à un système hôte comprenant un système d'exploitation et des applications exécutées sur ce système.

Pour permettre l'échange de données entre un périphérique USB et le système hôte, le système d'exploitation de celui-ci comprend un ou plusieurs gestionnaires de périphérique, aussi appelés *drivers* en terminologie anglo-saxonne, permettant l'accès et l'utilisation d'un périphérique. Dans de nombreux cas, les périphériques peuvent être mis en oeuvre avec des gestionnaires de périphérique standard, intégrés au système d'exploitation.

Néanmoins, dans les systèmes d'exploitation modernes, il est généralement possible à un fabricant de périphériques de fournir un gestionnaire de périphérique indépendamment du fournisseur du système d'exploitation. Dans ce cas, les périphériques sont, par exemple, livrés avec un CDROM contenant le gestionnaire correspondant.

Par ailleurs, il est généralement nécessaire de disposer de droits d'administration élevés pour pouvoir installer un nouveau gestionnaire de périphérique. De plus, dans certains systèmes d'exploitation, les gestionnaires de périphérique peuvent ou doivent être signés, c'est à dire être authentifiés de façon cryptographique par le système d'exploitation.

L'accès au périphérique par une application exécutée sur le système hôte est réalisé à travers une interface appelée API (sigle d'*Application Programming Interface* en terminologie anglo-saxonne) qui définit la manière dont un composant logiciel peut communiquer avec un autre, en particulier avec un gestionnaire de périphérique.

Il est rappelé ici qu'un périphérique USB fournit un certain nombre de services au système d'exploitation ainsi qu'aux applications. La norme USB définit la classe d'un périphérique USB, celle-ci peut être considérée comme la définition des interfaces entre le périphérique et le système hôte. Connaître la classe d'un périphérique USB doit permettre au système hôte d'implémenter un gestionnaire pour ce périphérique et doit permettre à un autre fournisseur de périphériques d'implémenter un périphérique compatible réalisant des fonctions analogues.

La norme USB définit des classes standard telles que les mémoires de masse et les interfaces réseau.

La norme USB donne également la possibilité de décrire un périphérique comme étant composite. Un tel périphérique est généralement appelé périphérique composite ou périphérique multifonction. Il permet de mettre en oeuvre plusieurs fonctions, par exemple, une fonction de mémoire de masse et une fonction d'interface réseau. Chaque fonction permet d'exécuter différentes requêtes, une requête étant par exemple l'écriture, la lecture, le chiffrement ou le déchiffrement d'une donnée. Un périphérique multifonction peut être considéré comme l'agglomération de plusieurs sous-périphériques, chacun définissant sa propre classe. Un système hôte voit généralement ce périphérique au travers de plusieurs gestionnaires : un gestionnaire multifonction qui gère l'agglomération et un gestionnaire par sous-périphérique, c'est-à-dire par fonction.

La norme USB permet à un périphérique USB d'implémenter une classe non définie par la norme. Dans ce cas, le fournisseur du périphérique doit fournir un gestionnaire spécifique au périphérique par système d'exploitation qu'il veut supporter.

Par exemple, un périphérique cryptographique peut fournir un stockage sécurisé ainsi que les services PKCS#11 (standard décrivant certains services et APIs de cryptographie). Le périphérique doit alors implémenter la classe stockage de masse et une classe PKCS#11 qui lui est spécifique.

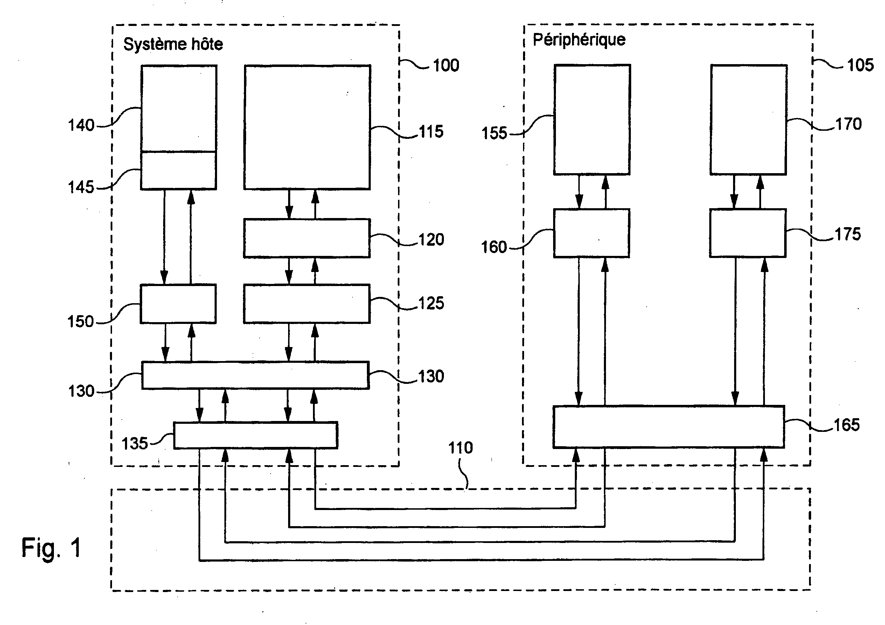

La figure 1 illustre un exemple de mise en oeuvre d'un tel périphérique multifonction comprenant un stockage sécurisé et offrant les services PKCS#11.

Le système hôte 100 est ici relié à un périphérique 105 comprenant un stockage sécurisé et offrant les services PKCS#11 via un bus USB 110.

Les applications 115 mettant en oeuvre les fonctions de stockage du périphérique utilisent le gestionnaire de système de fichiers 120 utilisant lui-même le gestionnaire de stockage USB 125, c'est-à-dire un *driver* standard de stockage USB. Le gestionnaire de stockage USB 125 fait appel au gestionnaire multifonction USB 130 utilisant le gestionnaire de bus USB 135.

De la même façon, les applications 140 mettant en oeuvre les services PKCS#11 font appel à la bibliothèque PKCS#11 145 qui est basée sur le gestionnaire PKCS#11 150, c'est-à-dire un *driver* spécifique aux services PKCS#11. Comme le gestionnaire de stockage USB 125, le gestionnaire PKCS#11 150 fait appel au gestionnaire multifonction USB 130 utilisant le gestionnaire de bus USB 135.

Dans le périphérique 105, les services de stockage sécurisé 155 utilisent le gestionnaire de stockage USB 160 qui fait lui-même appel au gestionnaire de bus USB 165.

De façon similaire, les services PKCS#11 170 du périphérique 105 utilisent le gestionnaire PKCS#11 175 qui fait lui-même appel au gestionnaire de bus USB 165.

Cependant, l'interfaçage d'un périphérique USB avec une application s'exécutant sur le système hôte pose plusieurs problèmes techniques.

Tout d'abord, un système d'exploitation donné ne fournit des gestionnaires de périphériques USB que pour certaines classes de périphériques. Ces classes de périphériques correspondent en général aux périphériques les plus répandus tels que les claviers, les souris et les clés ou les disques USB.

Par ailleurs, même si les services fournis par un périphérique sont définis par un standard, les mécanismes utilisés pour implémenter l'interface ne sont pas toujours définis. Par exemple dans le cas d'un périphérique fournissant les services définis par PKCS#11, les APIs sont définies entre les applications utilisant PKCS#11 et les fournisseurs de bibliothèques PKCS#11 mais l'interface entre la bibliothèque et le périphérique n'est pas couverte par le standard, ce qui explique qu'il n'y a pas de gestionnaire standard pour interfacer la librairie et le périphérique.

II sera également observé qu'un périphérique USB doit, de préférence, pouvoir être utilisé avec plusieurs types de systèmes d'exploitation. Il peut aussi être utilisé avant ou lors du démarrage d'un système d'exploitation. Dans ce cas, le périphérique doit être identifié selon l'une des classes supportées par le BIOS (acronyme de *Basic Input Output System* en terminologie anglo-saxonne) pour que celui-ci puisse y accéder. De nombreux BIOS différents existent et la plupart n'implémentent pas l'ensemble des protocoles et des classes définis par le consortium USB. En particulier, certains BIOS peuvent refuser de fonctionner avec un périphérique composite même s'ils supportent correctement l'une de ses classes.

Par exemple, il existe certains BIOS capables de démarrer sur un disque USB mais incapables de démarrer sur un périphérique identifié comme un périphérique composite dont l'une des classes est la classe disque. Cependant, il peut être essentiel de démarrer sur un périphérique cryptographique fournissant un stockage sécurisé. Il est donc important que n'importe quel BIOS supportant le démarrage sur un périphérique USB puisse démarrer sur un tel périphérique sécurisé.

Il sera également observé que l'installation d'un gestionnaire de périphérique nécessite généralement des droits d'administration élevés dans le système hôte. De plus, le système d'exploitation peut limiter voire interdire l'installation de gestionnaires non signés, ce qui implique de devoir signer le gestionnaire spécifique, cette opération se fait généralement à la discrétion du fournisseur du système hôte.

Par ailleurs, il est généralement nécessaire de fournir un gestionnaire de périphérique par version du système d'exploitation. La charge d'efforts à fournir en termes de tests et de validation du gestionnaire par le fournisseur du périphérique peut devenir rédhibitoire et entraîner ce fournisseur à limiter le support de son périphérique à un petit nombre de systèmes d'exploitation et de versions.

Enfin, le faible encombrement et les fonctionnalités de certains périphériques USB encouragent leur utilisation en mode nomade, c'est à dire leur utilisation sur un ordinateur n'appartenant pas au propriétaire du périphérique. Par exemple, un périphérique cryptographique peut être utilisé dans un cybercafé pour permettre le chiffrement et la signature de courriers. Dans ce genre d'utilisation, l'utilisateur du périphérique a rarement la possibilité ou les droits suffisants pour installer un gestionnaire spécifique au périphérique.

A titre d'illustration, la demande de brevet WO 2008/003599 décrit une méthode permettant d'accéder à différentes fonctions d'un périphérique multifonction en utilisant une interface unique. A ces fins, une commande de fonction peut être encapsulée dans une commande particulière conforme à cette interface unique pour être transmise selon le protocole de transmission associé à cette dernière. Après avoir été reçues, les commandes de fonction sont analysées pour, le cas échéant, extraire des commandes encapsulées. Les commandes reçues ou extraites sont alors transmises, via un module de routage, vers la fonction correspondante pour y être exécutées.

L'invention permet de résoudre au moins un des problèmes exposés précédemment.

L'invention a ainsi pour objet un procédé de traitement d'au moins une commande dans un périphérique multifonction comprenant une interface de communication adaptée à connecter ledit périphérique à un système hôte, ladite au moins une commande étant conforme à au moins l'une des fonctions dudit périphérique multifonction, appelée première fonction, le procédé étant caractérisé en qu'il comprend les étapes suivantes,
- réception de ladite au moins une commande ;
- traitement de ladite au moins une commande selon ladite première fonction ;
- analyse de ladite au moins une commande pour déterminer si au moins un paramètre spécifique lié à au moins une autre fonction, distincte de ladite première fonction, appelée seconde fonction, est associé à ladite au moins une commande ; et,
- en réponse à ladite analyse, si au moins un paramètre spécifique lié à ladite seconde fonction est associé à ladite au moins une commande, exécution d'une requête liée à ladite seconde fonction.

Le procédé selon l'invention permet ainsi de connecter un périphérique multifonction à un système hôte qui ne met en oeuvre qu'un gestionnaire unique de périphérique.

Selon un mode de réalisation particulier, le procédé comprend en outre une étape de traitement d'au moins une donnée associée à ladite au moins une commande pour obtenir ledit au moins un paramètre spécifique. Le procédé selon l'invention est ainsi capable de tenir compte d'éventuelles spécificités liées à ladite première fonction.

L'invention a également pour objet un procédé de mise en oeuvre d'au moins un service d'un périphérique multifonction comprenant une interface de communication adaptée à connecter ledit périphérique à un système hôte, ledit au moins un service étant appelé par au moins une commande conforme à au moins l'une des fonctions dudit périphérique multifonction, appelée première fonction, le procédé étant caractérisé en qu'il comprend les étapes suivantes,
- détermination de la fonction dudit périphérique multifonction à laquelle appartient ledit au moins un service ; et,
- si ledit au moins un service n'appartient pas à ladite première fonction, association à ladite au moins une commande d'une référence audit au moins un service et d'au moins un paramètre spécifique à ladite fonction dudit périphérique multifonction à laquelle appartient ledit au moins un service.

Le procédé selon l'invention permet ainsi à un système hôte, lors de la connexion un périphérique multifonction, de ne mettre en oeuvre qu'un gestionnaire unique de périphérique.

De façon avantageuse, ledit périphérique multifonction est identifié par ledit système hôte comme un périphérique standard adapté à mettre en oeuvre ladite première fonction. Le procédé selon l'invention permet ainsi au système hôte d'utiliser un gestionnaire de périphérique standard, sans nécessiter le développement et l'installation d'un ou de plusieurs gestionnaires de périphérique particuliers.

Selon des modes de réalisation particuliers, ledit au moins un paramètre spécifique est une adresse d'un dispositif externe ou une adresse de stockage de données. Le périphérique multifonction peut ainsi être reconnu comme une mémoire de masse ou une interface réseau.

L'invention a également pour objet un programme d'ordinateur comprenant des instructions adaptées à la mise en oeuvre de chacune des étapes du procédé décrit précédemment.

L'invention a aussi pour objet un dispositif pour périphérique multifonction comprenant une interface de communication adaptée à connecter ledit périphérique à un système hôte, ce dispositif étant caractérisé en ce qu'il comprend des moyens de traitement d'au moins une commande reçue à travers ladite interface de communication, ladite au moins une commande étant conforme à au moins l'une des fonctions dudit périphérique multifonction, appelée première fonction, pour permettre l'exécution d'une requête associée à ladite au moins une commande par au moins une autre fonction, distincte de ladite première fonction, appelée seconde fonction.

Le dispositif selon l'invention permet ainsi de connecter un périphérique multifonction à un système hôte qui ne met en oeuvre qu'un gestionnaire unique de périphérique.

De façon avantageuse, le dispositif comprend en outre des moyens d'identification dudit périphérique comme un périphérique standard adapté à mettre en oeuvre ladite première fonction.

Le dispositif selon l'invention permet ainsi au système hôte d'utiliser un gestionnaire de périphérique standard, sans nécessiter le développement et l'installation d'un ou de plusieurs gestionnaires de périphérique particuliers.

Selon un mode de réalisation particulier, le dispositif comprend en outre des moyens de traitement d'au moins un paramètre spécifique associé à ladite au moins une commande pour identifier ladite seconde fonction.

Toujours selon un mode de réalisation particulier, le dispositif comprend en outre des moyens de conversion pour obtenir ledit au moins un paramètre spécifique à partir d'au moins une donnée associée à ladite au moins une commande. Le dispositif selon l'invention est ainsi capable de tenir compte d'éventuelles spécificités liées à ladite première fonction.

Toujours selon un mode de réalisation particulier, ledit périphérique est adapté à mettre en oeuvre des fonctions de stockage, de cryptographie et/ou d'interface réseau. La première fonction est par exemple une fonction de stockage ou une fonction d'interface réseau.

Toujours selon un mode de réalisation particulier, le périphérique est du type USB ou PCI.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de mise en oeuvre standard d'un périphérique multifonction comprenant un stockage sécurisé et offrant des services PKCS#11 ;
- la figure 2 illustre un exemple de mise en oeuvre d'un périphérique multifonction comprenant un stockage sécurisé et offrant des services PKCS#11, conformément à l'invention ;
- la figure 3, comprenant les figures 3a et 3b, illustre schématiquement des exemples d'algorithmes mis en oeuvre dans le système hôte et dans le périphérique, respectivement, pour accéder à une seconde fonction du périphérique à l'aide d'une commande visant une première fonction du périphérique ; et,
- la figure 4, comprenant les figures 4a et 4b, représente un exemple de mise en oeuvre d'un périphérique multifonction comprenant une interface réseau et offrant des services PKCS#11, de façon standard et conformément à l'invention, respectivement.

Le domaine d'application de la présente invention concerne les systèmes d'information dans lesquels un périphérique, par exemple un périphérique USB, et une application tournant sur un système d'exploitation d'un système hôte ont besoin de communiquer entre eux.

L'invention permet de définir une interface entre le périphérique et l'application utilisant un ou plusieurs gestionnaires du système d'exploitation, sans nécessiter l'utilisation de gestionnaires de périphérique spécifiques. Seuls des gestionnaires de périphérique standard sont mis en oeuvre.

Bien qu'à des fins illustratives la description vise essentiellement des périphériques USB fournissant des services de cryptographie comprenant un stockage sécurisé ainsi que des services PKCS#11, les périphériques conformes à l'invention peuvent être de différentes natures.

Conformément à l'invention, les périphériques sont identifiés comme des périphériques d'une classe standard supportée par la majorité des systèmes d'exploitation et des BIOS. Ainsi, malgré leur nature composite, ils ne sont pas reconnus comme tels.

Les spécificités du périphérique sont ici gérées par une application et/ou une bibliothèque s'exécutant sur le système hôte à la demande de l'utilisateur. L'application et/ou la bibliothèque n'utilisent que les services de la classe standard pour implémenter un échange de données spécifiques avec le périphérique, il n'est donc plus nécessaire d'installer un gestionnaire de périphérique spécifique. En d'autres termes, les fonctions spécifiques et les données correspondantes ne sont pas transmises comme des instructions mais comme de simples données, celles-ci étant transmises à l'aide des fonctions du gestionnaire de périphérique standard.

La mise en oeuvre de ce mécanisme permet d'éviter l'installation de gestionnaires de périphérique spécifiques. Le périphérique est ainsi supporté par la plupart des BIOS ainsi que par la plupart des systèmes d'exploitation supportant la classe standard du périphérique.

Par ailleurs, l'utilisation d'un tel périphérique selon un mode nomade est simplifiée en ce que la fourniture logicielle accompagnant le périphérique est limitée à des applications et/ou des bibliothèques. Il n'est pas nécessaire de procéder à l'installation de modules logiciels systèmes ce qui permet d'envisager le support d'un plus grand nombre de systèmes d'exploitation et de versions.

Selon un mode de réalisation particulier, l'invention est mise en oeuvre dans le système décrit en référence à la figure 1 où un périphérique offrant une première fonction de stockage sécurisé et une seconde fonction de services PKCS#11 est connecté à un système hôte.

Le périphérique cryptographique est ici identifié selon sa première fonction, c'est-à-dire comme un périphérique appartenant à la classe standard de stockage de masse. L'accès au stockage sécurisé de ce périphérique cryptographique est par conséquent implémenté selon les services de la classe standard de stockage de masse.

La seconde fonction, c'est-à-dire ici les services PKCS#11, est accédée par l'intermédiaire d'une bibliothèque PKCS#11 qui met en oeuvre un mécanisme basé sur l'écriture et la lecture de données dans une zone de stockage du périphérique. Ainsi, les requêtes sont transmises sous la forme de données associées à des fichiers particuliers, c'est-à-dire sous la forme de commandes d'écriture de fichiers, tandis que les réponses à ces requêtes sont obtenues par la lecture de fichiers spécifiques. Les fichiers comprenant les requêtes sont interprétés par le périphérique pour exécuter les requêtes visées et générer les fichiers comprenant les réponses à ces requêtes.

De tels fichiers sont particuliers dans le sens où ils ne participent pas à la fonction de stockage sécurisé mais servent de zone d'échange entre la bibliothèque et le périphérique.

Ainsi, par exemple, le fichier spécifique ayant le nom REQ_EXEC peut être utilisé pour transmettre des requêtes au périphérique et le fichier appelé REQ_REP est utilisé pour accéder aux réponses aux requêtes. Les fichiers REQ_EXEC et REQ_REP sont stockés dans une mémoire du périphérique, de préférence la mémoire de masse, qui est utilisée, en partie, comme zone d'échange entre le périphérique et le système hôte.

Il convient de remarquer que plusieurs fichiers correspondant à des requêtes peuvent être utilisés. De même, plusieurs fichiers correspondant à des réponses à des requêtes peuvent être utilisés. Il est également possible d'utiliser un même fichier pour mémoriser alternativement les requêtes et les réponses aux requêtes.

De façon simplifiée, lorsqu'une application exécutée par le système hôte a besoin d'accéder à un service PKCS#11, elle s'adresse à la bibliothèque correspondante qui transmet la requête et les données associées sous forme de données à écrire dans le fichier REQ_EXEC dans le périphérique. Suite à la réception d'une commande d'écriture d'un fichier, le périphérique détermine si la commande d'écriture concerne le ou les fichiers utilisés pour recevoir les requêtes liées aux services PKCS#11, c'est-à-dire ici si la commande d'écriture vise le fichier REQ_EXEC. Dans l'affirmative, le périphérique analyse le contenu de ce fichier pour extraire la requête liée aux services PKCS#11, exécute cette requête selon les données associées mémorisées dans le fichier REQ_EXEC, ou dont les références sont indiquées dans ce fichier, et écrit la réponse à cette requête dans le fichier REQ_REP.

Après avoir écrit les données du fichier REQ_EXEC, la bibliothèque PKCS#11 1 lit le contenu du fichier REQ_REP à l'aide de la commande correspondante pour obtenir la réponse à la requête.

On notera cependant que les commandes d'écriture et de lecture de données, notamment dans des périphériques de stockage de type USB, ne visent pas des fichiers en tant que tels mais des secteurs. Un système de gestion de fichiers est mis en oeuvre dans le système hôte pour convertir des fichiers en secteurs. Une connaissance précise de la structure du système de fichiers est ainsi utilisée par les systèmes d'exploitation pour réaliser la traduction des demandes de lectures/écritures de fichiers en demandes de lectures/écritures de secteurs.

Le périphérique doit être en mesure d'établir la conversion inverse, c'est-à-dire de convertir des secteurs en fichiers, pour accéder au fichier représentant les requêtes et écrire les réponses à ces requêtes dans un fichier. La mise en oeuvre de l'invention telle que décrite précédemment nécessite donc une connaissance précise du système de fichiers utilisé par le périphérique.

Il existe cependant de nombreux types de gestionnaires de fichiers tels que FAT (acronyme de *File Allocation Table* en terminologie anglo-saxonne), FAT32 (similaire à FAT mais utilisant des adresses codées sur 28 bits) et NTFS (sigle de *NT File System* en terminologie anglo-saxonne).

Par ailleurs, le système hôte et son utilisateur ayant toute latitude pour choisir le système de fichiers utilisé sur un disque donné, le périphérique doit être en mesure de prendre en considération tous les types de gestionnaire de fichiers possibles.

Cependant, le périphérique n'a généralement pas les ressources nécessaires pour implémenter tous les systèmes de fichiers possibles.

Une solution consiste ici à implémenter un ou plusieurs fichiers spéciaux dans un disque particulier du périphérique (la classe standard de stockage de masse permet à un périphérique USB de présenter plusieurs disques). Le choix du gestionnaire de fichiers utilisé pour ce disque particulier est alors déterminé par le périphérique. Le gestionnaire de fichier est, de préférence, choisi parmi ceux supportés par le plus grand nombre de systèmes d'exploitation.

Le disque particulier est, de préférence, identifié par un label et/ou par un fichier documentation présent sur le disque comme ne devant pas et, avantageusement, ne pouvant pas être utilisé pour stocker des informations d'un utilisateur mais comme étant réservé à la bibliothèque PKCS#11.

Ainsi, le disque particulier fait appel à un gestionnaire de fichiers prédéterminé tandis que le ou les disques permettant à un utilisateur de stocker des données font appel au gestionnaire de fichiers choisi par l'utilisateur et/ou imposé par le système d'exploitation.

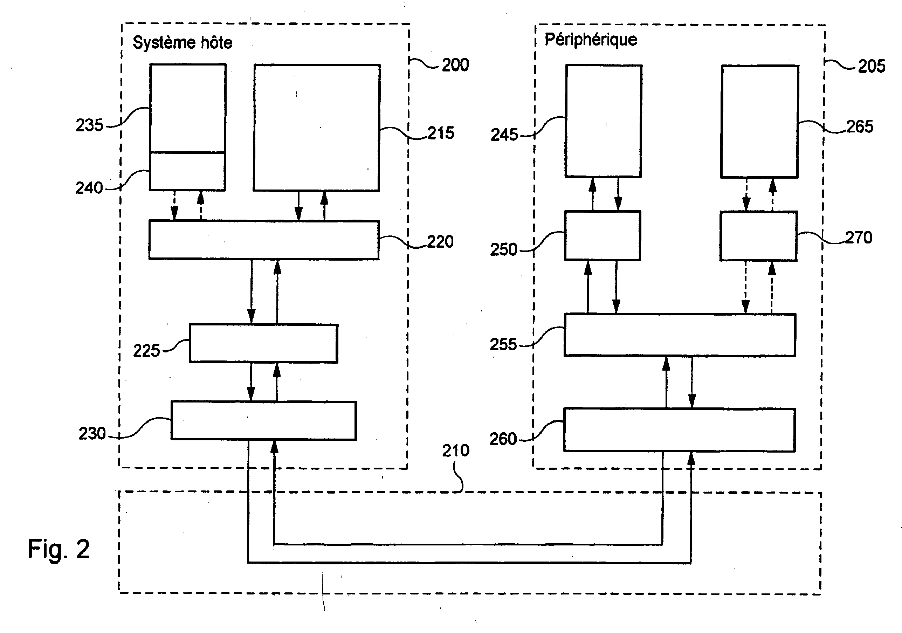

La figure 2 illustre un exemple de mise en oeuvre d'un périphérique multifonction comprenant un stockage sécurisé et offrant des services PKCS#11, conformément à l'invention.

Le périphérique représenté schématiquement ici offre les mêmes services à l'utilisateur que celui représenté sur la figure 1.

Le système hôte 200 est ici relié à un périphérique 205 comprenant un stockage sécurisé et offrant des services PKCS#11 via un bus USB 210.

Les applications 215 mettant en oeuvre les fonctions de stockage du périphérique utilisent un gestionnaire de système de fichiers 220 permettant de convertir les fichiers en secteurs. Le gestionnaire de système de fichiers 220, déterminé par l'utilisateur ou le système d'exploitation lors de la configuration du périphérique, utilise lui-même le gestionnaire de stockage USB 225, c'est-à-dire un *driver* standard de stockage USB. Le gestionnaire de stockage USB 225 fait appel au gestionnaire de bus USB 230.

L'ensemble formé par les références 215 à 230 utilise les principes généraux mis en oeuvre pour mémoriser des données et accéder à celles-ci dans un périphérique de classe standard de stockage de masse.

Les applications 235 mettant en oeuvre les services PKCS#11 font appel à la bibliothèque PKCS#11 240 qui transforme les requêtes aux services PKCS#11 en commande d'écriture de ces requêtes dans des fichiers du périphérique. La bibliothèque PKCS#11 240 utilise un gestionnaire de système de fichiers 220, déterminé par le périphérique, pour convertir les commandes d'écriture de fichiers en commande d'écriture de secteurs.

De même, la bibliothèque PKCS#11 240 transmet au périphérique des commandes de lecture de fichiers pour obtenir les réponses aux requêtes soumises. A nouveau, la bibliothèque PKCS#11 240 utilise le gestionnaire de système de fichiers 220 déterminé par le périphérique pour convertir les commandes de lecture de fichiers en commande de lecture de secteurs.

Dans le périphérique 205, les services de stockage sécurisé 245 sont basés sur un gestionnaire de stockage USB 250 qui est lui-même basé sur un gestionnaire inverse de système de fichiers 255 relié à un gestionnaire de bus USB 260.

De façon similaire, les services PKCS#11 265 sont basés sur un gestionnaire PKCS#11 270 qui est lui-même basé sur le gestionnaire inverse de système de fichiers 255 relié au gestionnaire de bus USB 260.

Lorsque le gestionnaire inverse de système de fichiers 255 reçoit une commande de lecture ou d'écriture de secteurs, il détermine à quel disque appartient le secteur.

Si le secteur appartient à un disque permettant à l'utilisateur de mémoriser des données ou d'accéder à celles-ci, la commande est transmise au gestionnaire de stockage USB 250 qui traite la commande de façon standard.

Si le secteur appartient au disque particulier utilisé pour mémoriser les fichiers spéciaux, la commande est transmise au gestionnaire de stockage USB 250 qui traite la commande de façon standard pour lire ou écrire les données correspondantes de façon standard. Parallèlement, si la commande est une commande d'écriture, le gestionnaire inverse de système de fichiers 255 est utilisé pour déterminer le ou les fichiers utilisés pour transmettre les requêtes liées aux services PKCS#11 et le gestionnaire PKCS#11 270 est activé pour accéder aux fichiers ainsi déterminés afin d'exécuter la ou les requêtes contenues dans ceux-ci et d'écrire le résultat de ces requêtes dans le ou les fichiers de réponse utilisés.

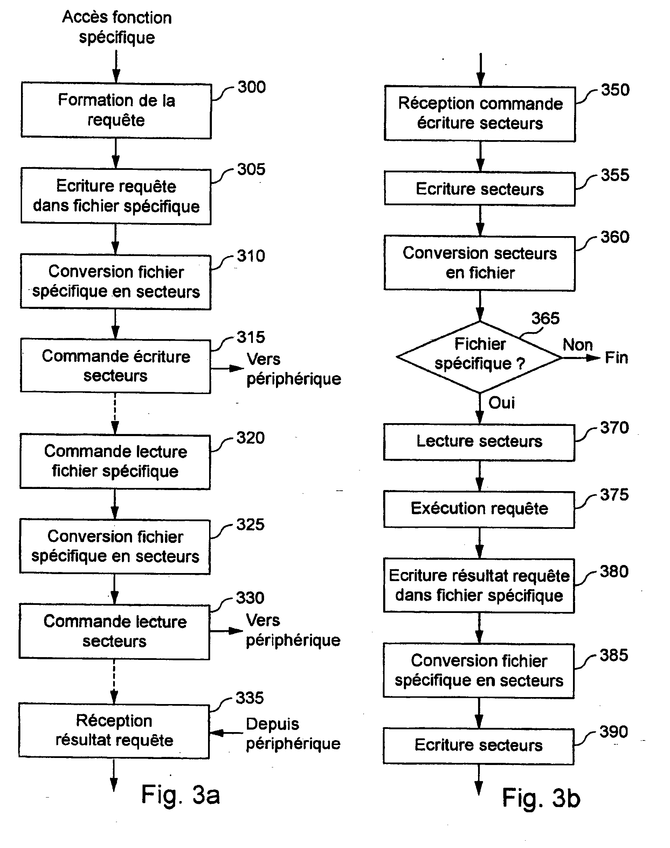

La figure 3, comprenant les figures 3a et 3b, illustre schématiquement des exemples d'algorithmes mis en oeuvre dans le système hôte et dans le périphérique, par exemple dans le périphérique représenté sur la figure 2, respectivement, pour accéder à une seconde fonction du périphérique à l'aide d'une commande visant une première fonction du périphérique.

La première fonction est ici une fonction de stockage tandis que la seconde fonction est une fonction spécifique, non supportée par le gestionnaire de périphérique utilisé, c'est-à-dire non supportée par le gestionnaire de périphérique correspondant à l'identifiant du périphérique.

L'application exécutée sur le système hôte voulant accéder à une fonction spécifique du périphérique forme la requête correspondante (étape 300). Cette requête est ensuite placée dans un fichier spécifique devant être mémorisé dans le périphérique (étape 305) à l'aide d'une commande d'écriture.

Pour écrire le fichier spécifique dans une mémoire du périphérique, le fichier spécifique est converti en secteurs (étape 310), de préférence en secteurs d'un disque particulier utilisant un gestionnaire de fichiers prédéterminé, et une commande d'écriture des secteurs est exécutée (étape 315). Le fichier spécifique est ainsi transmis au périphérique sous forme de secteurs.

Après avoir écrit le fichier spécifique dans le périphérique, le système hôte génère une commande de lecture d'un fichier spécifique dans le périphérique pour obtenir le résultat de la requête (étape 320). Le fichier spécifique à lire est converti en secteurs à lire (étape 325), de préférence en secteurs d'un disque particulier utilisant un gestionnaire de fichiers prédéterminé, et une commande de lecture de ces secteurs est exécutée (étape 330). Le système hôte reçoit alors le contenu du fichier spécifique représentant le résultat de la requête (étape 340).

A la réception d'une commande d'écriture de secteurs (étape 350), le périphérique écrit les données reçues dans les secteurs visés par la commande (étape 355). Simultanément ou de façon séquentielle, les secteurs reçus sont convertis en fichier (étape 360) en utilisant un gestionnaire inverse de fichiers correspondant, de préférence, à un gestionnaire de périphérique prédéterminé.

Un test est ensuite effectué pour déterminer s'il s'agit d'un fichier spécifique (étape 365). Si les secteurs écrits ne correspondent pas à un fichier spécifique, l'algorithme s'arrête. Si, au contraire, les secteurs écrits correspondent à un fichier spécifique, les secteurs préalablement écrits sont lus (étape 370) et la requête mémorisée dans le fichier correspondant à ces secteurs est exécutée (étape 375). Alternativement, le contenu des secteurs est mémorisé dans une mémoire temporaire avant que le test 365 ne soit effectué pour éviter, si nécessaire, une lecture des secteurs (un accès à une mémoire temporaire est généralement plus rapide qu'un accès à un disque).

Le résultat de la requête est mis sous forme de fichier spécifique (étape 380) et converti en secteurs (étape 385) qui sont écrits sur le disque, de préférence un disque spécifique utilisant un gestionnaire de fichiers prédéterminé, du périphérique (étape 390). Le résultat de la requête est ainsi accessible au système hôte via une commande de lecture des secteurs correspondant au fichier spécifique.

Comme indiqué précédemment, l'invention peut être mise en oeuvre avec d'autres types de périphériques, classes de périphériques et/ou bus, notamment des bus de type PCI (sigle de *Peripheral Component Interconnect* en terminologie anglo-saxonne) ou PCI Express.

Il est ainsi possible, par exemple, de mettre en oeuvre une souris USB fournissant des services de cryptographie. La classe standard est ici, de préférence, la classe HID (sigle de *Human Interface Device* en terminologie anglo-saxonne) et les services de cryptographie sont identifiés comme des boutons ou des capteurs supplémentaires et accédés sans nécessiter de gestionnaire spécifique.

De même, il est possible de mettre en oeuvre une interface réseau PCI ou PCI Express fournissant des services de cryptographie. Les normes PCI et PCI Express permettent de définir des périphériques multifonction analogues aux périphériques composites USB. Il est ainsi possible d'implémenter des cartes PCI se comportant comme des cartes réseau, représentant une première fonction, et comme des cartes adaptées à fournir des services de cryptographie, représentant une seconde fonction.

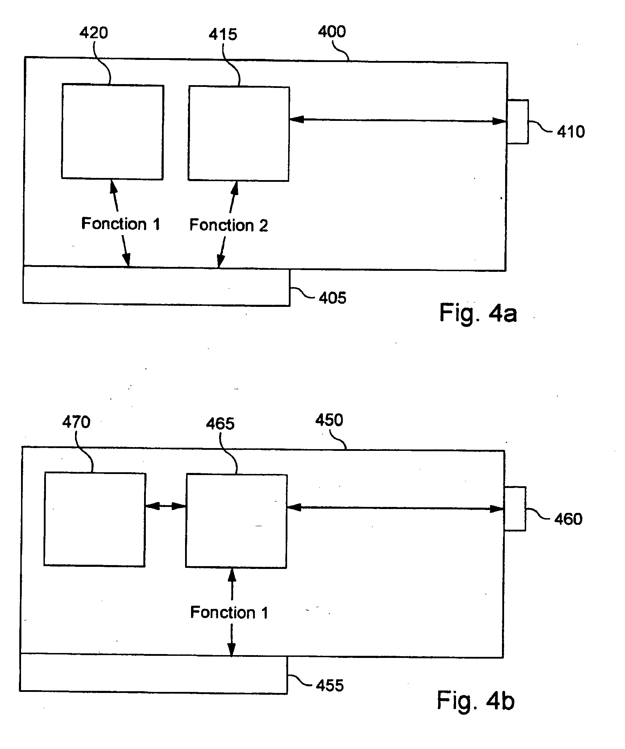

Comme illustré sur la figure 4a, une implémentation d'une telle carte consiste, de façon standard, à implémenter les services de cryptographie comme une première fonction (au sens de la norme PCI) et la partie carte réseau comme une seconde fonction.

La carte 400 comprend ici une interface PCI ou PCI Express 405 ainsi qu'une interface réseau 410. Selon la fonction mise en oeuvre, l'utilisateur, ou plus précisément le système d'exploitation du système hôte, peut accéder aux services d'accès au réseau 415 ou aux services cryptographiques 420.

Une telle carte présente néanmoins l'inconvénient d'exiger un gestionnaire de périphérique spécifique pour la partie cryptographie.

En mettant en oeuvre l'invention, la carte peut ne fournir qu'une seule fonction carte réseau (au sens de la norme PCI) et donner la visibilité des services cryptographiques au système hôte comme un serveur de cryptographie distant ayant, par exemple, une adresse IP (sigle d'*internet Protocol* en terminologie anglo-saxonne) particulière (IP=w.x.y.z) alors qu'en fait les trames envoyées à l'adresse IP particulière w.x.y.z sont traitées localement sur la carte sans être émises sur le réseau et les réponses sont générées comme des trames émanant de cette adresse.

Comme illustré sur la figure 4b, une telle carte 450 ayant une interface PCI ou PCI Express 455 et une interface réseau 460 n'a besoin que d'un seul gestionnaire de périphérique, ici de type interface réseau, pour accéder aux services d'accès au réseau 465 de la carte où, si l'adresse utilisée est une adresse particulière (IP=w.x.y.z), la commande est transmise aux services cryptographiques 470 et, dans les autres cas (IP ≠ w.x.y.z), la commande est considérée comme une commande réseau classique.

Un tel mode de réalisation peut être envisagé avec d'autres types de bus, notamment un bus USB pour une interface réseau USB fournissant des services de cryptographie. Le gestionnaire de périphérique peut alors être de classe CDC (sigle de *Communication Device Class* en terminologie anglo-saxonne).

## Revendications

1. Procédé de traitement d'au moins une commande dans un périphérique multifunction (205, 450) comprenant une interface de communication (260, 455) adaptée à connecter ledit périphérique à un système hôte (200), ladite au moins une commande étant conforme à au moins l'une des fonctions dudit périphérique multifonction, appelée première fonction, le procédé étant caractérisé en qu'il comprend les étapes suivantes,
- réception (350) de ladite au moins une commande ;
- traitement (355) de ladite au moins une commande selon ladite première fonction ;
- analyse (365) de ladite au moins une commande pour déterminer si au moins un paramètre spécifique lié à au moins une autre fonction, distincte de ladite première fonction, appelée seconde fonction est associé à ladite au moins une commande et traitement (360) d'au moins une donnée associée à ladite au moins une commande pour obtenir ledit au moins un paramètre spécifique, ledit au moins un paramètre spécifique étant une adresse de stockage de données et ledit traitement d'au moins une donnée associée à ladite au moins une commande comprenant une étape de conversion de secteurs en fichier ; et,
- en réponse à ladite analyse, si au moins un paramètre spécifique lié à ladite seconde fonction est associé à ladite au moins une commande, exécution (375) d'une requête liée à ladite seconde fonction.

2. Procédé selon revendication 1 selon lequel ledit périphérique multifonction est identifié par ledit système hôte comme un périphérique standard

3. Programme d'ordinateur comprenant des instructions adaptées à la mise en oeuvre de chacune des étapes du procédé selon la revendication 1 ou la revendication 2.

4. Dispositif pour périphérique multifonction (205, 450) comprenant une interface de communication (260, 455) adaptée à connecter ledit périphérique à un système hôte (200), ce dispositif étant **caractérisé en ce qu'**il comprend des moyens de traitement (255) d'au moins une commande reçue à travers ladite interface de communication, ladite au moins une commande étant conforme à au moins l'une des fonctions dudit périphérique multifonction, appelée première fonction, lesdits moyens de traitement étant adaptés à traiter ladite au moins une commande reçue selon ladite première fonction, pour permettre l'exécution d'une requête associée à ladite au moins une commande par au moins une autre fonction, distincte de ladite première fonction, appelée seconde fonction, le dispositif comprenant en outre des moyens de traitement d'au moins un paramètre spécifique associé à ladite au moins une commande pour identifier ladite seconde fonction ainsi que des moyens de conversion pour obtenir ledit au moins un paramètre spécifique à partir d'au moins une donnée associée à ladite au moins une commande, lesdits moyens de conversion étant adaptés à convertir des secteurs en fichier.

5. Dispositif selon la revendication précédente comprenant des moyens d'identification dudit périphérique comme un périphérique standard adapté à mettre en oeuvre ladite première fonction.

6. Dispositif selon la revendication 4 ou la revendication 6, ledit périphérique étant adapté à mettre en oeuvre des fonctions de stockage, de cryptographie et/ou d'interface réseau, ladite première fonction étant une fonction de stockage ou une fonction d'interface réseau.

7. Dispositif selon l'une quelconque des revendications 4 à 6, ledit périphérique étant du type USB ou PCI.

## Claims

1. Method for processing at least one command in a multifunction peripheral (205, 450) comprising a communication interface (260, 455) adapted to connect said peripheral to a host system (200), said at least one command being in conformity with at least one of the functions of said multifunction peripheral, called the first function, the method being **characterised in that** it comprises the following steps,
- receiving (350) said at least one command;
- processing (355) said at least one command according to said first function;
- analysing (365) said at least one command to determine if at least one specific parameter related to at least one other function, distinct from said first function, called the second function, is associated with said at least one command, and processing (360) at least one item of data associated with said at least one command to obtain said at least one specific parameter, said at least one specific parameter being a data storage address and said processing of at least one item of data associated with said at least one command comprising a step for conversion of sectors into a file; and
- in response to said analysis, if at least one specific parameter related to said second function is associated with said at least one command, executing (375) a request related to said second function.

2. Method according to claim 1, according to which said multifunction peripheral is identified by said host system as a standard peripheral.

3. Computer programme comprising instructions adapted to implement each of the steps of the method according to claim 1 or claim 2.

4. Device for a multifunction peripheral (205, 450) comprising a communication interface (260, 455) adapted to connect said peripheral to a host system (200), this device being **characterised in that** it comprises processing means (255) for processing at least one command received via said communication interface, said at least one command being in conformity with at least one of the functions of said multifunction peripheral, called the first function, said processing means being adapted to process said at least one command received according to said first function, to permit execution of a request associated with said at least one command by at least one other function, distinct from said first function, called the second function, the device additionally comprising processing means for processing at least one specific parameter associated with said at least one command to identify said second function and conversion means for obtaining said at least one specific parameter from at least one item of data associated with said at least one command, said conversion means being capable of converting sectors into a file.

5. Device according to the preceding claim, comprising means for identifying said peripheral as a standard peripheral capable of implementing said first function.

6. Device according to claim 4 or claim 5, said peripheral being adapted to implement storage, cryptographic and/or network interface functions, said first function being a storage function or a network interface function.

7. Device according to any one of claims 4 to 6, said peripheral being of the USB or PCI type.

## Patentansprüche

1. Verfahren zur Verarbeitung mindestens eines Befehls in einem multifunktionalen Peripheriegerät (205, 450) mit einer Kommunikationsschnittstelle (260, 455), die dazu geeignet ist, das Peripheriegerät an ein Host-System (200) anzuschließen, wobei der mindestens eine Befehl mindestens einer der Funktionen des multifunktionalen Peripheriegeräts, die erste Funktion genannt wird, entspricht, wobei das Verfahren **dadurch gekennzeichnet ist, dass** es folgende Schritte umfasst:
- Empfangen (350) des mindestens einen Befehls,
- Verarbeiten (355) des mindestens einen Befehls gemäß der ersten Funktion,
- Analysieren (365) des mindestens einen Befehls, um zu bestimmen, ob mindestens ein spezifischer Parameter, der mit mindestens einer weiteren Funktion verknüpft ist, die sich von der ersten Funktion unterscheidet und zweite Funktion genannt wird, dem mindestens einen Befehl zugeordnet ist, und Verarbeiten (360) mindestens eines dem mindestens einen Befehl zugeordneten Datenelements, um den mindestens einen spezifischen Parameter zu erhalten, wobei der mindestens eine spezifische Parameter eine Datenspeicheradresse ist und das Verarbeiten mindestens eines dem mindestens einen Befehl zugeordneten Datenelements einen Schritt zum Umwandeln von Sektoren in Ordner umfasst, und
- Ausführen (375) einer mit der zweiten Funktion verknüpften Anfrage in Reaktion auf die Analyse, wenn mindestens ein mit der zweiten Funktion verknüpfter spezifischer Parameter dem mindestens einen Befehl zugeordnet ist.

2. Verfahren nach Anspruch 1, bei dem das multifunktionale Peripheriegerät von dem Host-System als Standardperipheriegerät identifiziert wird.

3. Computerprogramm, das Instruktionen umfasst, die zur Umsetzung jedes der Schritte des Verfahrens nach Anspruch 1 oder Anspruch 2 geeignet sind.

4. Vorrichtung für ein multifunktionales Peripheriegerät (205, 450), das eine Kommunikationsschnittstelle (260, 455) aufweist, die dazu geeignet ist, das Peripheriegerät an ein Host-System (200) anzuschließen, wobei diese Vorrichtung **dadurch gekennzeichnet ist, dass** sie Mittel (255) zur Verarbeitung mindestens eines Befehls aufweist, der über die Kommunikationsschnittstelle empfangen wurde, wobei der mindestens eine Befehl mindestens einer der Funktionen des multifunktionalen Peripheriegeräts, die erste Funktion genannt wird, entspricht, wobei die Verarbeitungsmittel dazu geeignet sind, den mindestens einen, gemäß der ersten Funktion empfangenen Befehl zu verarbeiten, um das Ausführen einer dem mindestens einen Befehl zugeordneten Anfrage mit mindestens einer weiteren Funktion zu ermöglichen, welche sich von der ersten Funktion unterscheidet und zweite Funktion genannt wird, wobei die Vorrichtung ferner Mittel zur Verarbeitung mindestens eines spezifischen Parameters aufweist, der dem mindestens einen Befehl zugeordnet ist, um die zweite Funktion zu identifizieren, sowie Umwandlungsmittel, um den mindestens einen spezifischen Parameter ausgehend von mindestens einem, dem mindestens einen Befehl zugeordneten Datenelement zu erhalten, wobei die Umwandlungsmittel dazu geeignet sind, Sektoren in Ordner umzuwandeln.

5. Vorrichtung nach dem vorhergehenden Anspruch, die Mittel zur Identifizierung des Peripheriegeräts als Standardperipheriegerät aufweist, welches dazu geeignet ist, die erste Funktion auszuführen.

6. Vorrichtung nach Anspruch 4 oder Anspruch 5, wobei das Peripheriegerät dazu geeignet ist, Speicher-, Kryptographie- und/oder Netzwerkschnittstellenfunktionen auszuführen, wobei die erste Funktion eine Speicherfunktion oder eine Netzwerkschnittstellenfunktion ist.

7. Vorrichtung nach einem der Ansprüche 4 bis 6, wobei das Peripheriegerät vom Typ USB oder PCI ist.
